# EUROPEAN PATENT SPECIFICATION

(11) **EP 1 684 903 B1**
(45) Date of publication and mention of the grant of the patent: **17.08.2016**
(21) Application number: 04798287.1
(22) Date of filing: 15.11.2004
(51) Int. Cl.: B01L 3/00, G01N 1/28, F16K 11/08, B01D 29/66

(54) **NUCLEIC ACID AMPLIFICATION ASSAY AND ARRANGEMENT THEREFOR**
NUCLEINSÄUREAMPLIFIKATIONSASSAY UND ANORDNUNG DAFÜR
ESSAI D'AMPLIFICATION D'ACIDES NUCLEIQUES ET ENSEMBLE ASSOCIE

(30) Priority: 18.11.2003 US 520647 P; 18.11.2003 FI 20031678
(43) Date of publication of application: 02.08.2006
(73) Proprietor: Abacus Diagnostica OY, 20520 Turku (FI)
(72) Inventor: NURMI, Jussi, FI-21600 Parainen (FI); KORPIMÄKI, Teemu, FI-20100 Turku (FI)
(74) Representative: Turun Patenttitoimisto Oy
(86) International application number: PCT/FI2004/000678
(87) International publication number: WO 2005/049206

(56) References cited:
- WO-A2-02/04921
- US-A- 4 581 014
- US-A- 6 106 483
- Peter Rådström,Rickard Knutsson,Petra Wolffs,Maria Dahlenborg,Charlotta Löfström: "Pre-PCR processing of samples" In: Sachse and Frey: "Methods in Molecular Biology, PCR detection of Microbial Pathogens", 2003, Humana Press, Totowa, new Jersey vol. 216, pages 31-50,
- M.A.B. STARBUCK, P.J. HILL, G.S.A.B. STEWART: "Ultra sensitive detection of Listeria monocytogenes in milk by the polymerase chain reaction (PCR)", LETTERS IN APPLIED MICROBIOLOGY, vol. 15, no. 6, December 2002 (2002-12), pages 248-252,

## Description

### FIELD OF THE INVENTION

The present invention relates to nucleic acid amplification assays. The invention further relates to an arrangement for the assay. More specifically the present invention relates to nucleic acid amplification assays with a simplified process for preparing a biological sample to enable an altogether simplified analysis of an analyte or analytes.

### BACKGROUND OF THE INVENTION

The publications and other materials used herein to illuminate the background of the invention, and in particular, cases to provide additional details respecting the practice, are incorporated by reference.

During the past few decades, tremendous advances have been made in the field of nucleic acid amplification assays. The polymerase chain reaction and other nucleic acid amplification and detection methods have made it possible to specifically detect and quantify various biological entities - hereafter called analytes - in different kinds of samples. Measurement of the amount or mere presence of such analytes is of importance in a vast range of situations, examples of which include diagnosis and monitoring of disease in man or in animals; environmental monitoring; detection of biological warfare agents; forensic sciences and detection and recognition of cells and viruses. Developments in different aspects of these molecular recognition techniques - instrumentation, label technologies, reagents and consumables - have made it possible to detect even minute amounts of specific molecules of interest. Using the polymerase chain reaction (Saiki et al., Science 1985, 230: p. 1350-4) coupled with a suitable detection method, for example, it is often possible to detect a single nucleic acid analyte molecule of a particular base sequence in the presence of a great excess of other sequences.

However, nucleic acid amplification assays are limited by the fact that the sample material itself, from which the measurements are to be made, must be purified prior to analysis. This is due to the fact that many components of e.g. blood, environmental or food samples can inhibit the enzymes used in analysis; interfere with the formation of bioaffinity bonds that are essential for the assays; increase the background signal obtained in the measurement step; or otherwise compromise assay performance. This is particularly true for DNA or RNA extraction (Lantz et al. Biotechnol. Annu. Rev. 2000: 5 p. 87-130). Common methods of sample preparation have been reviewed recently by Rådström et al. [Sachse K & Frey J (ed.), Methods in molecular biology, Vol 216: PCR detection of microbial pathogens, Humana Press Inc., Totowa, USA: p. 31-50]. These include biochemical methods based on, for example, extraction of nucleic acids using organic solvents, followed by ethanol precipitation and solubilisation in an aqueous solvent; or lysis of cells in the presence of chaotropic salts, affinity binding of the nucleic acids on a solid phase; and elution of pure nucleic acids using an aqueous solvent. The main advantage of these biochemical extraction methods is that the analyte is obtained in a pure form without any assay inhibitors. However, all of these methods present a real challenge to automation, are labour intensive and require specialized, expensive equipment together with harsh chemicals that cannot be used in, for example, field conditions.

In addition to the possibility of assay inhibition, sample volume itself is often a problem. Even if a sensitive assay is capable of detecting a single analyte molecule, this is sometimes not enough. For example, according to regulations concerning some pathogenic organisms, such as bacteria belonging to the genera *Salmonella* or *Listeria,* foodstuff must not contain more than a single viable bacterial cell in 25 g of the foodstuff. The amount of sample - 25 g - is far too great to be analysed in one bioaffinity reaction. For this reason, the analyte must be concentrated or/and enriched prior to analysis. Analyte concentration can be done by immunological or/and physical means (see Rådström et al.). More often than not, physiological enrichment in selective culture media is used. Such enrichment usually takes between 24 and 48 hours. In many cases, the time needed to perform the analysis is therefore very long, which results in significant storage costs before a product, e.g. animal feed product, can be released to market.

To simplify the sample pre-treatment protocols, several attempts have been made to develop methods where assay inhibitors would be removed without the need to extract DNA or RNA in a pure form and where the analyte would be concentrated to a detectable level. Mainly, these methods are based on enrichment of the target cells from a sample, after which the cells are subjected to analysis. Venkateswaran et al. (Applied and Environmental Microbiology 1997, 63: p. 4127-4131) described the use of centrifugation and filtration to extract bacterial cells that were subsequently subjected to analysis by PCR. Although this method allowed detection of bacterial cells in the absence of DNA extraction, it was limited in the sense that a centrifuge was needed, which makes the method poorly suited for automation or for use outside a laboratory. Also, in the method described by Venkateswaran et al., target cells were collected from the filter by resuspending them in a buffer, which may very well result in some cells being trapped on the filter. This means that the method does not allow quantitative determination of the amount of the target cells.

WO 02/04921 discloses a method for utilizing a filtration device for removing interferants from a sample containing cells in an automate apparatus.

US 4,581,014 discloses a fluid infusion system with a selector valve. US 6,106,483 discloses a cytology collection apparatus.

In summary, the use of sophisticated molecular recognition and quantitation techniques is usually only possible in specialized laboratories, because the purification and enrichment techniques that are required by most nucleic acid sequence detection methods are labour intensive and need specialized equipment and operator skills.

Therefore, there is a need for simple, fast and inexpensive sample preparation methods that allow reduction of the amount of assay inhibitors in the sample together with concentration or enrichment of analyte molecules.

### OBJECTS AND SUMMARY OF THE INVENTION

An object of the present invention is to provide a nucleic acid amplification assay with simplified process for preparing a biological sample to enable an altogether simplified analysis of an analyte or analytes.

Another object of the present invention is to provide an arrangement for preparing a biological sample according to the invention.

Still another object of the present invention is to provide a nucleic acid amplification assay kit for analysis of an analyte or analytes comprising the arrangement for preparing a biological sample according to the invention.

Thus the present invention provides a nucleic acid amplification assay for quantitative and/or qualitative analysis of the presence of a specific analyte or specific analytes in a biological sample, which analytes, if present, are contained in biological particles of said sample, in which assay the sample is forced in a first direction through a filter that retains said biological particles. Characteristic for the method is that the biological particles retained in the filter are flushed, by a flush flow, in a second opposite direction through the filter out of the filter and the flush flow containing the biological particles flushed out is analysed for the analyte or analytes, analysing consisting of amplification and detection, without any further purification; and means for analysing the analyte or analytes is selected from the group consisting of polymerase chain reaction (PCR), reverse transcriptase polymerase chain reaction (RT-PCR), ligase chain reaction (LCR), proximity ligation assay, nucleic acid sequence based amplification (NASBA), strand displacement amplification (SDA) and any combination thereof.

The present invention further provides an arrangement for preparing a biological sample for quantitative and/or qualitative analysis of the presence of a specific analyte or specific analytes, which analytes, if present, are contained in biological particles of the sample wherein the arrangement comprises
a) a housing for a filter;
b) a filter within said housing for retaining the biological particles containing the analyte or analytes, said filter having two sides,
   i) a sample inlet side and
   ii) a flushing flow inlet side; and
c) means for
   i) leading the sample through the filter from the sample inlet side to the flushing flow inlet side,
   ii) leading the flush flow from its inlet side to the sample inlet side, and
   iii) retrieving for analysis biological particles containing the analyte flushed from the filter.
   Characteristic for the arrangement is that it comprises a filter rack that is a multi-way valve, with separate connections for sample inlet, sample retrieval, flush flow inlet and waste disposal, and optionally for wash flow, and the filter rack with the filter can be turned in alternative positions so that flow is directed from
d) the sample inlet into the filter from the sample inlet side to the flush flow inlet side and to waste or optionally for use as flush flow,
e) the flush flow inlet into the filter from the flush flow inlet side to the sample inlet side and to sample retrieval, or
f) optionally, the flow inlet into the filter from the sample inlet side to the flush flow inlet side and to waste or for recycling.

The present invention also provides a kit of parts, components and/or reagents for performing the assay according to the invention. Characteristic for the kit is that it comprises the arrangement according to the invention.

### BRIEF DESCRIPTION OF THE DRAWINGS

Figure 1 shows the basic principle of the invention.
Figure 2a and 2b schematically show the principle of the invention used with pre-filtration.
Figure 3a, 3b and 3c schematically show the principle of an automatic sample pre-treatment instrument utilizing the principles of the present invention.
Figure 4 shows a standard curve for the detection of *Listeria monocytogenes* from milk using the present invention for sample pre-treatment and real time PCR for analyte detection.
Figure 5 shows a standard curve for the detection of *Listeria monocytogenes* from cheese using the present invention for sample pre-treatment and real time PCR for analyte detection.
Figure 6 shows a standard curve for the detection of *Listeria monocytogenes* from salted salmon using the present invention for sample pre-treatment and real time PCR for analyte detection.
Figure 7 shows a standard curve for the detection of *Bacillus subtilis* from Luria broth using the present invention for sample pre-treatment and real time PCR for analyte detection.
Figure 8 shows a standard curve for the detection of *Bacillus subtilis* endospores from potato flour using the present invention for sample pre-treatment and real-time PCR for analyte detection.
Figure 9 shows a picture of an agarose gel analysis of the PCR amplifications of an actin fragment from human blood leucocytes isolated with the method of the present invention.

### DETAILED DESCRIPTION OF THE PREFERRED EMBODIMENTS

The term *nucleic acid amplification assay* as used herein refers to methods and techniques that are used to determine the presence or the presence and quantity of an analyte molecule in a sample, which methods and techniques include a first sample pre-treatment step and a second amplification step and a third detection step. The amplification step and the detection step together form an analysis step. In the sample pre-treatment step, the sample is treated so that its contents can be subjected to an analysis step. Important features of the sample pre-treatment step include but are not limited to removing from the sample any interfering substances that could inhibit the subsequent analysis step and/or adjusting the concentration of the analyte molecule so that its concentration is suitable for analysis. In the amplification step, all or a part of the pre-treated sample molecules are subjected to conditions under which conditions enzymatic or chemical amplification of a nucleic acid molecule or nucleic acid molecules occurs. The molecule or molecules that is or are amplified can be identical to the analyte molecule or to a part of the analyte molecule, the presence or the presence and quantity of which in the sample is being analysed, or can be different from the analyte molecule. In the third step of the nucleic acid amplification assay, which third step is the detection step, the appearance or the appearance and quantity of the amplification product produced in the amplification step is determined. The conditions of the amplification step are chosen so that the appearance or the appearance and quantity of an amplification product reflects or reflect the presence or the presence and the quantity of the analyte molecule in the sample.

In one preferred embodiment of the present invention, a nucleic acid amplification assay comprises the steps of
1) preparing a biological sample for quantitative and/or qualitative analysis of the presence of a specific analyte or specific analytes, which analytes, if present, are contained in biological particles of the sample, in which method the sample is forced in a first direction through a filter that retains said biological particles characterised in that said biological particles retained in said filter are flushed, by a flush flow, in a second opposite direction through said filter out of said filter;
2) subjecting the flush flow obtained in the previous step to conditions under which enzymatic or chemical amplification of one or several nucleic acid molecules occurs, the conditions being selected so that the appearance or the appearance and the quantity of an amplified product nucleic acid or amplified nucleic acids reflects the presence or the presence and the quantity of the analyte or analytes in the biological sample, said molecule or molecules being identical or different to the analyte or analytes, the presence or the presence and the quantity of which is being analysed in the biological sample; and
3) determining the appearance or the appearance and the quantity of the amplification product obtained in the previous step.

It will be appreciated by those skilled in the art that the analysis step, consisting of an amplification step and of a detection step, can be performed in many different ways. In one preferable embodiment of the present invention, the analysis step is performed by real-time polymerase chain reaction (PCR). In real-time PCR, the presence or the presence and quantity of a nucleic acid is determined by placing a sample suspected to contain the nucleic acid in a container containing an entity capable of indicating the presence of the nucleic acid and capable of providing a signal related to the quantity of the nucleic acid. This entity can, for example, be an intercalating dye or a probe. Next, the mixture is subjected to conditions under which the nucleic acid is amplified. The signal provided by the entity is recorded in real time during the amplification or, alternatively, after completion of the amplification, at different temperatures, said signal being related to the presence or the presence and quantity or the presence and quantity and quality or the presence and quality of the nucleic acid. Other s uitable ways of performing the analysis step include but are not limited to real-time polymerase chain reaction (PCR); PCR and agarose gel electrophoresis; and PCR with homogeneous or heterogeneous hybridization detection of the PCR product using labelled oligonucleotide probes or probes made of nucleic acid analogs. Alternatively, instead of using the polymerase chain reaction for amplification, other amplification methods can be used. Other possible amplification methods include but are not limited to reverse trariscriptase PCR (RT-PCR), nucleic acid sequence based amplification (NASBA; Compton J, 1997, Nucleic acid sequence-based amplification, Nature 350:91-92), ligase chain reaction (LCR), proximity ligation assay [Gullberg M, Fredriksson S, Taussig M, Jarvius J, Gustafsdottir S, Landegren U; A sense of closeness: protein detection by proximity ligation. Curr Opin Biotechnol. 2003 Feb;14(1):82-6] and strand displacement amplification [SDA; Walker GT, Fraiser MS, Schram JL, Little MC, Nadeau JG, Malinowski DP, Strand displacement amplification - an isothermal, in vitro DNA amplification technique; Nucleic Acids Res. 1992 Apr 11;20(7):1691-6]. Suitable amplification and detection methods have been discussed for example in the book Molecular Cloning, A Laboratory Manual [Sambrook and Russell (ed.), 3rd edition (2001), Cold Spring Harbor Laboratory Press, Cold Spring Harbor, New York, USA].

The object of the present invention is to provide simple, fast and cost-effective sample preparation that is amenable to automation as well as manual operation that allows purification and concentration of e.g. biological nucleic acid or protein analytes from biological, environmental or other liquid or gaseous samples. Gaseous and liquid samples are suitable as such whereas solid samples have first to be suspended in a liquid.

A seminal finding of the present invention is that target cells can be enriched and purified from assay inhibitors by using a filter that allows liquid or gas to be directed through the filter in two opposed directions: the sample is first forced through the filter in such a manner that the target cells or other biological complexes of interest are retained on and/or in the filter while any contaminating or inhibitory substances pass through, after which the direction of flow is reversed and the target cells or other biological complexes are collected and subjected to molecular analysis without further purification steps.

In nucleic acid assays, pre-analytical processing of samples is of utmost importance. To analyse e.g. the protein and/or nucleic acid content of a sample, it is often necessary to purify and to concentrate the sample, otherwise it is impossible to determine the amount or mere presence of the specific analyte of interest in the sample. This is typically due to either presence of assay inhibitors in the sample or low concentration of analyte or both. Most sample preparation methods, reviewed e.g. by Rådström et al. (2003), are limited by the fact that they are time-consuming and labour intensive and require specialized equipment, operator skills and harsh chemicals.

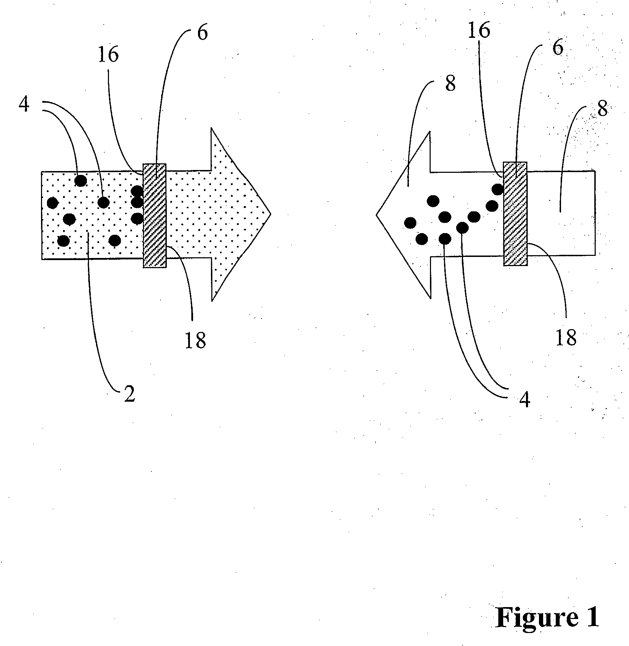

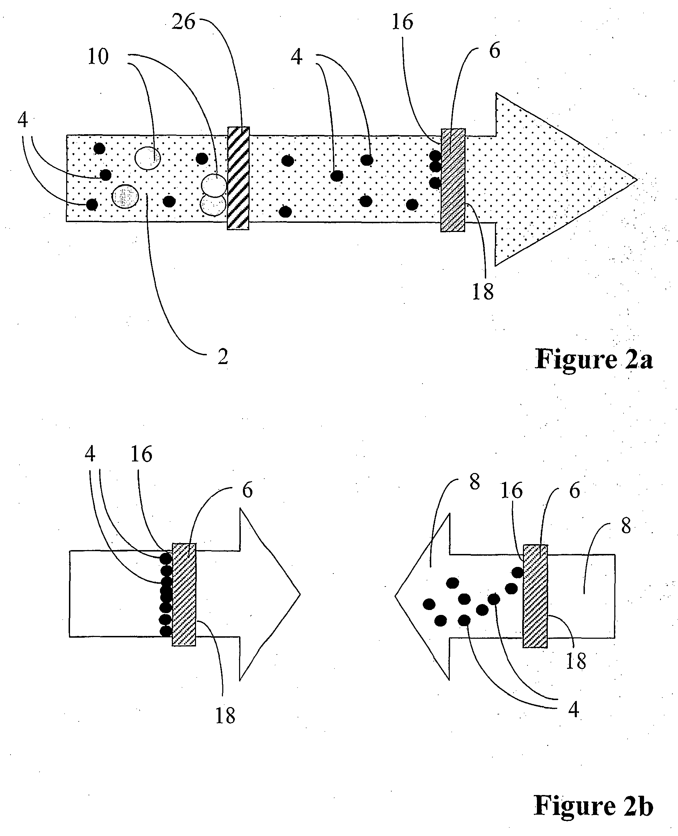

The present invention provides simple process for sample purification and enrichment that is amenable to automated or manual use. The general principle of the process is depicted in figures 1 and 2. As can be seen from these figures, the technique is based on separation of biological particles 4, e.g. cells, containing the molecules of interest from the sample matrix using a filter 6. Optionally, the sample 2 can be pre-filtered before application to the main filter 6 in order to remove larger particles 10 (figure 2) that might interfere with the analysis of the analyte or analytes. As the biological particles 4 of interest are trapped on and/or in the filter 6, any interfering substances, such as compounds that could inhibit the subsequent analytical steps, pass through. After the entire volume of sample 2 has been forced through the filter 6, the biological particles 4 of interest can be optionally washed by e.g. applying a suitable volume of water or other liquid through the filter 6 (figure 2). After this first step, the direction of flow 8 is reversed so that the trapped particles 4 are detached from the filter 6. This second flush volume can be adjusted so that the particles 4, now purified from inhibitors, are flushed in a volume that is smaller than the initial sample volume, therefore resulting in effective enrichment or concentration of the analyte. The force and volume of the reverse flush flow 8 can be adjusted so that all or nearly all trapped analyte containing biological particles 4 are collected. This enables even quantitative analysis of the amount of particles 4 in the sample 2.

The flush flow 8 can be any flow, even that of the sample filtrate. Preferably it is, however, a liquid or gas flow other than the sample filtrate in order to avoid reintroducing components of the original sample that might interfere with the analysis of the analyte.

*Flush flow in a second opposite direction through the filter* as used herein means that the direction of flow in relation to the filter plane of the sample inlet side 16 of the filter 6 is changed so that the trapped particles are collected into the flush flow 8 filtrate after changing the direction of flow. As will be appreciated by those skilled in the art, this action can be accomplished in different ways. For example the position of the filter 6 can be changed so that the direction of flow in relation to the filter 6 changes; or the filter can remain stationary while direction of flow is changed; or the filter 6 and direction of flow can both be adjusted so that the same end result, collection of trapped biological particles 4, is achieved. The flush flow 8 can be directed toward the filter from any suitable direction, as long as it flows out from the filter on the sample inlet side 16 and the biological particles 4 contained in the sample 2 are first trapped in the filter 6 and then, after changing the flow direction, collected in the flush flow 8 filtrate.

In some applications, the sample 2 may contain interfering particles or inhibitor complexes 10 that are greater in size than the biological particles 4, e.g. cells, containing the molecular species of interest. In these cases, it is possible to perform a first filtration where the biological particles 4 of interest pass through the first filter 26 while the interfering greater particles 10 are trapped in the first filter 26. The filtrate of the first filter 26 containing e.g. the complexes of interest 4 is then forced through a second filter 6 that traps the e.g. complexes of interest while any interfering substances, such as compounds that could inhibit the subsequent analytical steps, pass through. After this, the direction of flow through the second filter 6 is changed and the biological particles 4 of interest are collected and then subjected to analysis. Again, it is possible to adjust the volumes applied through the filters 26, 6 at the different steps to achieve optimal purity and concentration of the particles 4.

The process of the present invention can be performed manually using a manual filtration device and a manual device that allows application of material through the filter, suitably a syringe. Alternatively, the process of the present invention can be performed using an automated device that is designed to perform the physical actions necessary to force a sample through a filter; to reverse the direction of flow through the filter; and to collect the biological particles. Suitably, pressure or vacuum is used to force material through a filter.

The terms *biological particles* as used herein refer to prokaryotic or eukaryotic cells or spores or components thereof, viral particles or complexes containing protein and nucleic acid, or complexes containing protein or complexes containing nucleic acid as well as any combinations thereof. Biological particles can e.g. be bacteria or bacterial cells, plant pollen, mitochondria, chloroplasts, cell nuclei, viruses, phages, chromosomes or ribosomes.

Retention of the biological particles in the filter can be due to their size and/or due to their chemical properties. Typically retention is essentially due to either the size of the particles or the chemical properties of the particle.

Suitably, the biological particles purified and enriched according to the principle depicted in figures 1 and 2 is analysed by a method that allows measurement of the presence or amount of a specific molecule in the particles. These methods include but are not limited to the following: the polymerase chain reaction (PCR), reverse transcriptase polymerase chain reaction (RT-PCR), ligase chain reaction (LCR), proximity ligation assay, oligonucleotide ligation assay (OLA), nucleic acid sequence based amplification (NASBA), strand displacement amplification (SDA). A combination of methods can also be used.

Suitably, the biological particles are flushed with a liquid or a gas that is different from the liquid or gas originally present in the sample prior to forcing the sample through the filter. Alternatively, the biological particles are flushed with the same liquid or gas that was present in the sample prior to forcing the sample through the filter.

Suitable the assay of the present invention can be used to detect a living and/or dead cell or virus; a nucleic acid; or any combination thereof. Typically, the method of the present invention can be used to detect one or more of the following: a bacterium, a yeast, a mould, a eukaryotic cell or organism, a cancer cell, a virus (e.g. pathogenic), a nucleic acid, a ribonucleic acid (RNA), a deoxyribonucleic acid (DNA), a derivative of a nucleic acid, or a complex of protein and nucleic acid. The method can also be used to detect any combination thereof.

Suitably, the assay of the present invention is used for one or more of the following purposes: diagnostics, environmental monitoring, detection of biological warfare agents, forensics, detection of micro-organisms, monitoring of industrial processes, drug discovery, development of medicaments, development of nutraceuticals, product quality control and genetic analysis.

The invention also concerns a kit of parts, components and/or reagents for use in the assay according to the invention. Such a kit comprises the arrangement according to the invention and additionally other parts, components and/or reagents for performing the assay. Additional other parts, components and/or reagents are typically tailored for a specific analysis or a group of specific analyses. The kit can comprise a set of essential parts, components and/or reagents, but need not comprise everything (but the sample) needed for the analysis or analyses. Preferably it comprises all the parts, components and/or reagents not otherwise available at the typical site of carrying out the specific analysis or analyses.

Figure 1 shows the basic principle of the invention. Analyte particles 4 are collected from a sample 2 by a filtration step. The flow through the filter 6 is then changed in such a way that pure analyte particles 4 are flushed by the flush flow 8 from the filter 6, ready for analysis.

Figures 2a and 2b show a schematic presentation of the principle of the invention used in a more complex way. Large sample contaminants 10 are removed from the sample 2 with optional pre-filtration using a pre-filter 26 after which the analyte particles 4 are collected from the sample 2 by filtration with a filter 6. Any small molecule contaminants from the sample that may have been retained on the filter 6 are removed by an optional washing step. The flow through the filter 6 is then reversed in such a way that pure analyte particles 4 are flushed from the filter by the flush flow 8 and the particles 4 are ready for analysis.

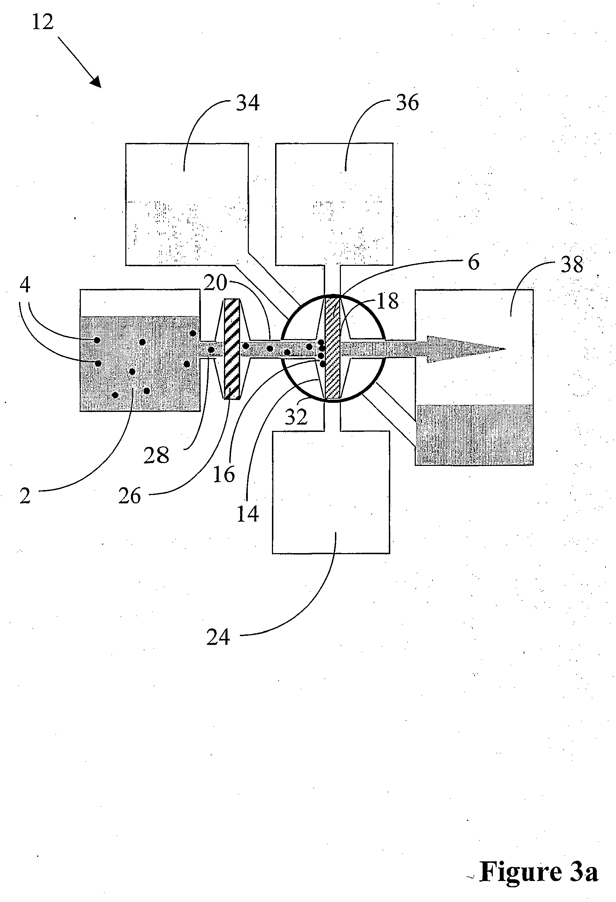

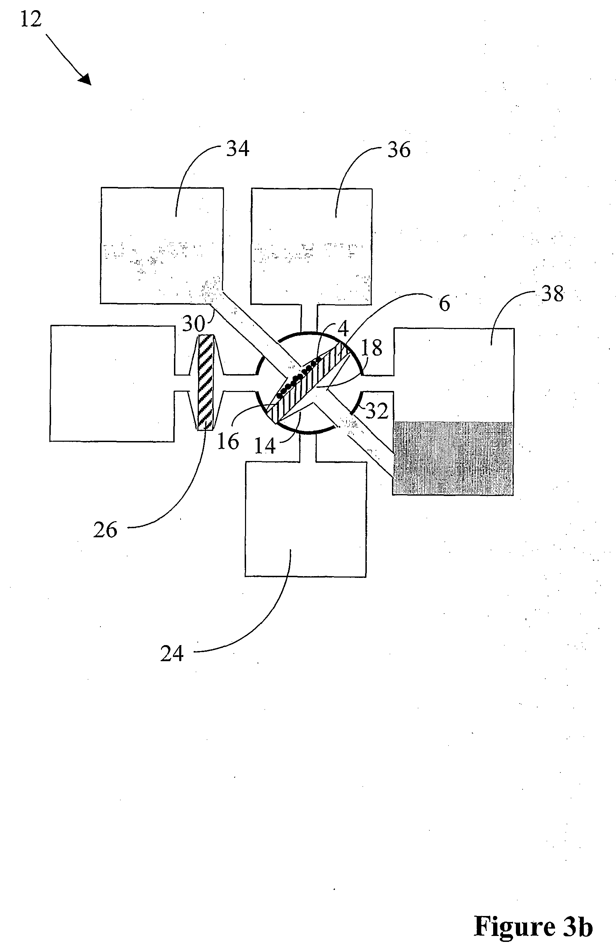

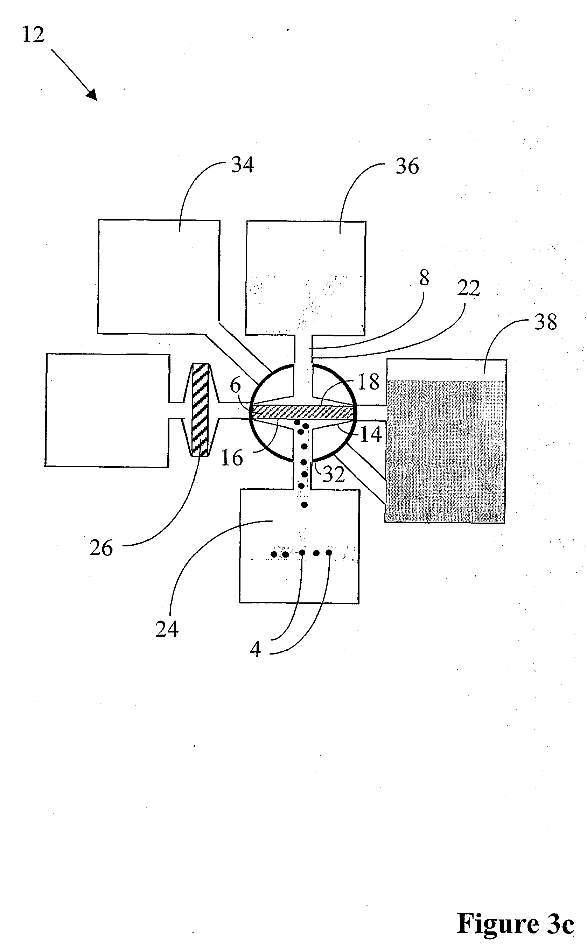

Figures 3a, 3b and 3c show the principle of a prototype automatic sample pre-treatment instrument utilizing the principles of the present invention. In figure 3a the sample 2 with its analyte containing biological particles 4 is first pumped along a flow channel 28 so that it passes through an optional pre-filter 26, which removes large sample contaminants. Next the sample 2 passes through a filter 6 from the sample inlet side 16 to the flush flow inlet side 18 in its housing 14 mounted on a filter holder rack 32 capable of rotation. Analyte particles 4 are thus bound on the filter 6. The filtrate of filter 6 is led to waste 38. In figure 3b the filter holder rack 32 is then optionally rotated in such a way that wash buffer 34 can be pumped through a pipe 30 through the filter 6 from the sample inlet side 16 to the flush flow inlet side 18, removing small sample contaminants adhering to the filter 6. The filtrate of the wash buffer is led to waste 38. In figure 3b the filter holder rack 32 is finally rotated in such a way that buffer 36 for flushing can be pumped through the filter 6 in a reverse direction compared to the sample and wash buffer flow, i.e. from the flush flow inlet side 18 to the sample inlet side 16. Analyte particles 4 are thus flushed with the flush flow 8 and retrieved 24 pure and ready for analysis.

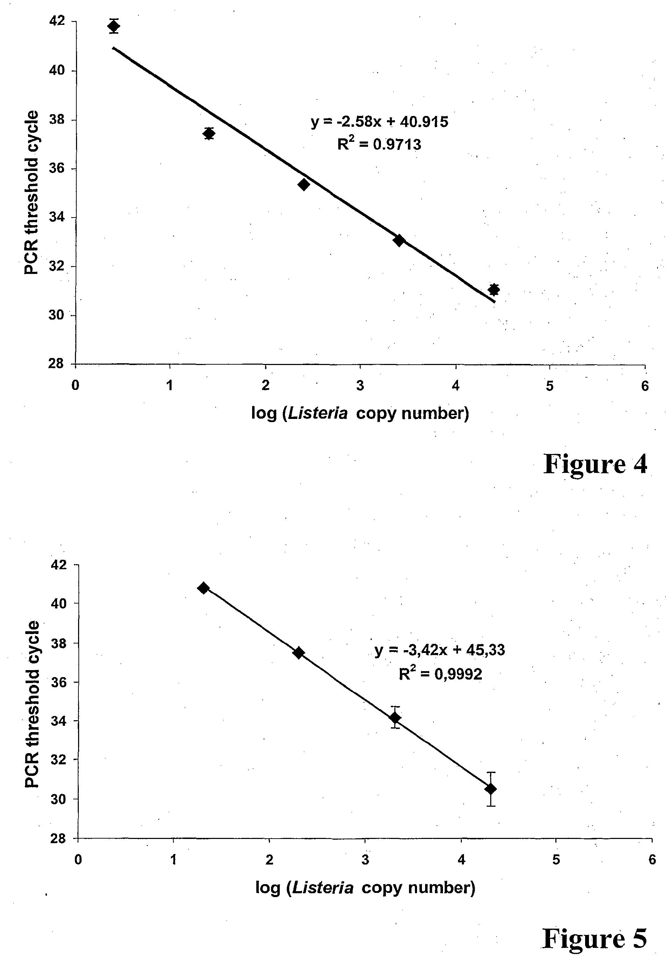

Figure 4 is a standard curve for the detection of *Listeria monocytogenes* from milk using the process of the present invention for sample pre-treatment and real time PCR for analyte detection.

Figure 5 is a standard curve for the detection of *Listeria monocytogenes* from cheese using the process of the present invention for sample pre-treatment and real time PCR for analyte detection.

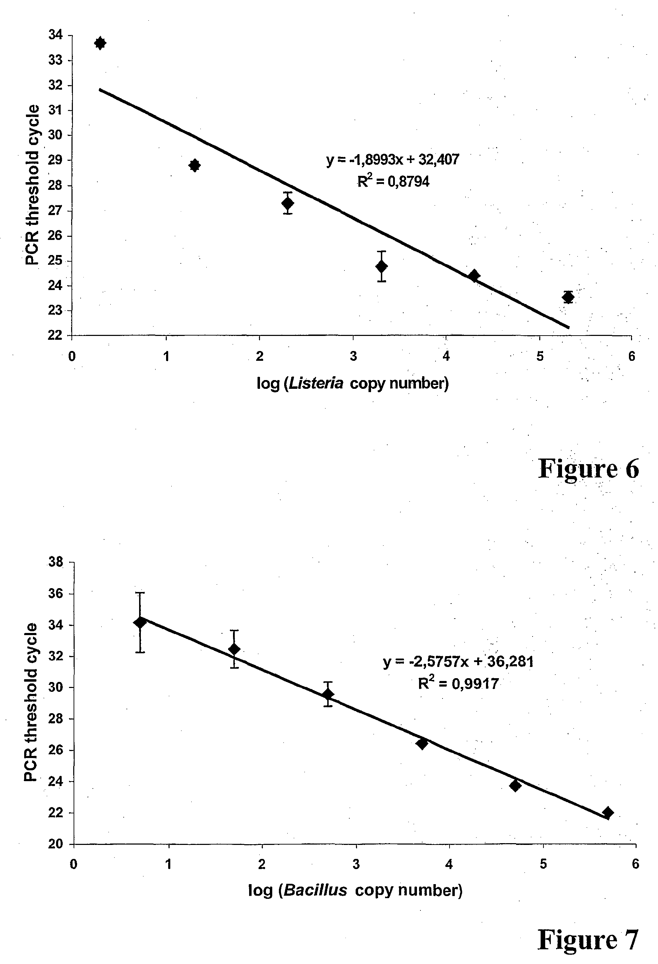

Figure 6 is a standard curve for the detection of *Listeria monocytogenes* from salted salmon using the process of the present invention for sample pre-treatment and real time PCR for analyte detection.

Figure 7 is a standard curve for the detection of *Bacillus subtilis* from Luria broth using the process of the present invention for sample pre-treatment and real time PCR for analyte detection.

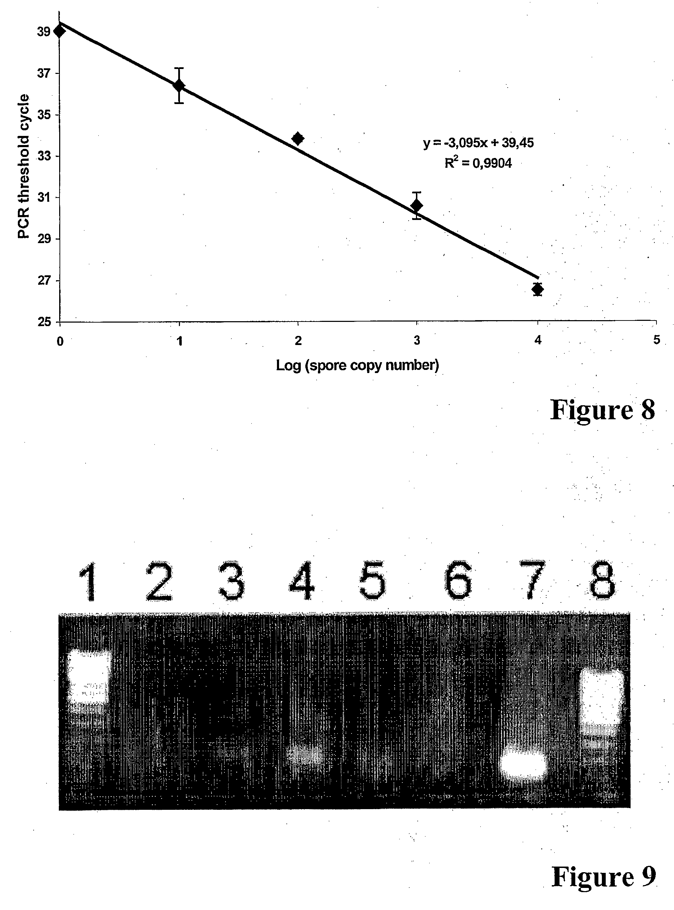

Figure 8 is a standard curve for the detection of *Bacillus subtilis* endospores from potato flour using the process of the present invention for sample pre-treatment and real-time PCR for analyte detection.

Figure 9 is a picture of an agarose gel analysis of the PCR amplifications of an actin fragment from human blood leucocytes isolated with the method of the present invention. Lanes 1 and 8 are molecular weight standards (GeneRuler™ 100bp DNA Ladder, Fermentas Life Sciences, Lithuania) whereas lane 7 is a positive control and lane 2 is a negative control. Lanes 3 to 6 are PCR reactions with 1, 1, 10 and 10 µl of extracted leucocytes added, respectively. The results show that the 136 bp actin fragment gets amplified only in the presence of the extracted leucocytes.

### Methods

### Bacterial strains

*Listeria monocytogenes* strain ATCC 7644 was used in examples 1-3. *Bacillus subtilis* strain 168 DE1 [Ebbole, D.J. and Zalkin, H. (1987) Cloning and Characterization of a 12-Gene Cluster from Bacillus subtilis Encoding Nine enzymes for de Novo Purine Nucleotide Synhesis. J. Biol. Chem. 262, 8274-8287] was used in examples 4 and 5.

### Real-time PCR

The real-time PCR detection method used for the detection of analytes in the examples [Nurmi, J., Wikman, T., Karp, M. and Lövgren, T. (2002) High-Performance real-Time Quantitative RT-PCR Using Lanthanide Probes and a Dual-Temperature Hybridisation Assay. Anal. Chem. 74, 3525-2532.] is based on environment sensitive terbium chelates that have greater fluorescence intensity when they are free in solution than when attached to single-stranded DNA. During the extension phase of PCR the 5'-3'-exonucleolytic DNA polymerase digests the lanthanide probe that is specifically hybridised to template DNA. This results in fluorescence signal increase that is measured in a time-resolved manner with a Victor 1420 Multilabel counter (Perkin Elmer Life Sciences Wallac, USA). The small background fluorescence resulting from undigested lanthanide probes is further decreased with a QSY-7-labelled quencher probe that hybridises to the terbium probe in the measurement temperature. The thermal cycling was performed with a Peltier Thermal Cycler (MJ Research, USA).

Probe, quencher and primer sequences used in PCR reactions

| Oligonucleotide | Sequence from 5' to 3'end | Label/position |
|---|---|---|
| *Listeria* probe | CGATTTCATCCGCGTGTTTCTTTTCGTA | Tb / 5' |
| *Listeria* quencher | CGCGGATGAAATCG | QSY-7/3' |
| *Listeria* 5'primer | TGCAAGTCCTAAGACGCCA | None |
| *Listeria* 3'primer | CACTGCATCTCCGTGGTATACTAA | None |
| Bacillus probe | TTGATGTGATGGCTCCTGGCCA | Tb/5' |
| Bacillus quencher | CCATCACATCAA | QSY-7/3 |
| Bacillus 5'primer | ATGGATGTTATCAACATGAG | None |
| Bacillus 3'primer | GAGTCGCCATGGACGTTC | None |
| Actine 5'primer | TGAAGTCTGACGTGGACATC | None |
| Actine 3'primer | CTTGATCTTCATTGTGCTGGG | None |

### Pre-culture of Listeria monocytogenes

Fresh *Listeria monocytogenes* cells were prepared as follows. An aliquot of 5 ml of brain heart infusion broth (Labema, Finland) was inoculated with *Listeria* cells and cultured overnight at 37 °C. Dilutions of these cultures were plated on nutrient agar plates (Labema) to determine the amount of *Listeria* cells in each batch.

### Examples

### Example 1

### Detection of Listeria monocytogenes from milk

Ten fold dilutions of fresh overnight *Listeria monocytogenes* cultures were made to ½ Fraser broth (Labema). 20 µl of each dilution was mixed with 1 ml of milk (2 % fat content) and ½ Fraser to a total volume of 10 ml. The *Listeria* cells were then grown for 18 h at 30 °C. One ml samples of each of these cultures were filtered through a 5 µm pore-size pre-filter in order to remove large sample particles. *Listeria* cells were then collected on a 0.45 µm pore-size filter by passing the sample through it. The cells on filter were washed with 10 ml of 0.9 % NaCl, flow direction through the filter was reversed and the cells were flushed with 500 µl of sterile water. 5 µl of the eluate was used in PCR reactions as template. The PCR reactions had the following conditions: 1.25 U AmpliTaq Gold DNA Polymerase, 1xPCR buffer II and 5 mM MgCl2 (Applied Biosystems, USA), 0.2 mM dNTPs (Amersham Biosciences, U.K.), 0.3 µM *Listeria* primers, 0.83 µM *Listeria* probe and 8.3 µM *Listeria* quencher in a total volume of 50 µl. The thermal cycling profile was 95 °C 10 min, 95 °C 15 s, 60 °C 1 min repeated for a total of 40 cycles. In the end of each of the last 20 cycles the temperature was briefly lowered to 35 °C for time-resolved fluorescence measuring. PCR results were plotted against plating results in order to obtain the standard curve presented in figure 4.

### Example 2

### Detection of Listeria monocytogenes from cheese

The enrichment step was done like in example 1, except that instead of using milk, 1 g of blue cheese (minced thoroughly with a blender) was mixed with the fresh *Listeria* cells and ½ Fraser broth. Two ml aliquots of each of the enriched samples were filtered through a 5 µm pore-size pre-filter in order to remove large sample particles. *Listeria* cells were then collected on a 0.45 µm pore-size filter by passing the sample through it. The cells on filter were washed with 20 ml of 0.9 % NaCl, flow direction through the filter was reversed and the cells were flushed with 500 µl of sterile 0.9 % NaCl. 5 µl of the eluate was used in PCR reactions as template. The PCR analysis was done as in example 1. PCR results were plotted against plating results in order to obtain the standard curve presented in figure 5.

### Example 3

### Detection of Listeria monocytogenes from fish

The enrichment step was done like in example 1, except that instead of using milk, 1 g of salted salmon (minced thoroughly with a blender) was mixed with the fresh *Listeria* cells and ½ Fraser broth. Two ml samples of each of these cultures were filtered through a 5 µm pore-size pre-filter in order to remove large sample particles. *Listeria* cells were then collected on a 0.45 µm pore-size filter by passing the sample through it. The cells on filter were washed with 10 ml of 0.9 % NaCl, flow direction through the filter was reversed and the cells were flushed with 500 µl of sterile water. 5 µl of the eluate was used in PCR reactions as template. The PCR analysis was done as in example 1. PCR results were plotted against plating results in order to obtain the standard curve presented in figure 6.

### Example 4

### Detection of Bacillus subtilis from LB growth medium

*Bacillus subtilis* cells grown overnight in 2.5 ml of LB- medium (10 g tryptone, 5 g yeast extract and 10 g NaCl per liter, pH 7.0) were serially diluted to LB-medium. One ml of each dilution was filtered through a 0.22 µm pore size filter. The cells on filter were washed with 1 ml of sterile water, the flow direction through the filter was reversed and the cells were flushed with 0.5 ml of sterile water. 5 µl of the eluate was used as template in PCR reactions that had the following conditions: 1.5 U AmpliTaq Gold DNA Polymerase, 1xPCR buffer II and 6.5 mM MgCl2 (Applied Biosystems, US), 0.8 mM dNTPs (Amersham Biosciences), 0.5 µM *Bacillus* primers, 1.7 µM *Bacillus* probe and 41.5 µM Bacillus quencher in a total volume of 50 µl. The thermal cycling profile was 95 °C 10 min, 95 °C 15 s, 53 °C 30 s and 61°C 30 s repeated for a total of 40 cycles. In the end of each of the last 20 cycles the temperature was briefly lowered to 35 °C for time-resolved fluorescence measuring. The amount of *Bacillus* cells in each of the serial dilutions was determined with platings. PCR results were plotted against plating results in order to obtain the standard curve presented in figure 7.

### Example 5

### Detection of Bacillus subtilis endospores from potato flour

Dilutions of *Bacillus subtilis* spores were made to Ringer solution (8.6 g NaCl, 0.3 g KCl, 0.48 g CaC12 per liter) containing 10 % potato flour suspension. The dilutions were first prefiltered through 5 µm pore size filters and then the cells were collected by passing the samples through 0.45 µm pore size filters. The spores on filter were washed with 1 ml of sterile water, the flow direction through the filter was reversed and the spores were flushed with 1 ml of sterile water. 5 µl of the eluate was added to PCR reactions as template. The PCR analysis was done as in example 4. The amount of *Bacillus spores* in each of the samples was determined with platings. PCR results were plotted against plating results in order to obtain the standard curve presented in figure 8.

### Example 6

### Extraction of leucocytes from whole blood

An aliquot of 300 µl of whole EDTA blood was mixed with 900 µl of 20 mM Tris-HCl, pH 7.5 in order to lyse the red blood cells. Leucocytes were then collected by filtration through a 5 µm pore size filter. The leucocytes on the filter were washed with 3 ml of the above buffer, the flow direction through the filter was reversed and the cells flushed from the filter with 1 ml of sterile water. Aliquots from 1 to 10 µl were used as templates in 50 µl PCR reactions that contained 2.0 U AmpliTaq Gold DNA Polymerase, 1xPCR buffer II, 3.5 mM MgCl₂, 0.2 mM dNTPs and 0.5 µM Actine primers. The thermal cycling profile was 95 °C 10 min, 95 °C 30 s, 60 °C 30 s and 72 °C 30 s repeated for a total of 40 cycles. The PCR reactions were analyzed with agarose gel electrophoresis. The picture of the gel is shown in figure 9. The results show that the 136 bp actin fragment gets amplified only in the presence of the extracted leucocytes.

It will be appreciated that the methods of the present invention can be incorporated in the form of a variety of embodiments, only a few of which are disclosed herein. It will be apparent for the specialist in the field that other embodiments exist and do not depart from the spirit of the invention. Thus, the described embodiments are illustrative and should not be construed as restrictive.

## Claims

1. A nucleic acid amplification assay for quantitative and/or qualitative analysis of the presence of a specific analyte or specific analytes in a biological sample, which analytes, if present, are contained in biological particles (4) of said sample (2), in which assay the sample (2) is forced in a first direction through a filter (6) that retains said biological particles (4) **characterised in that** said biological particles (4) retained in said filter (6) are flushed, by a flush flow (8), in a second opposite direction through said filter (6) out of said filter (6) and said flush flow (8) containing said biological particles (4) flushed out is analysed for the analyte or analytes, analysing consisting of amplification and detection, without any further purification; and means for analysing the analyte or analytes is selected from the group consisting of polymerase chain reaction (PCR), reverse transcriptase polymerase chain reaction (RT-PCR), ligase chain reaction (LCR), proximity ligation assay, nucleic acid sequence based amplification (NASBA), strand displacement amplification (SDA) and any combination thereof.

2. The assay of claim 1 **characterised in that** said assay comprises an additional filtration prior to the filtration retaining the biological particles (4) containing the analyte or analytes, which additional filtration does not retain the biological particles (4) containing the analyte or analytes but retains particles (10) that might interfere with the analysis of the analyte or analytes.

3. The assay of claim 1 or 2 **characterised in that** retention of the biological particles (4) containing the analyte or analytes in the filter (6) is essentially size dependent.

4. The assay of any of claims 1 to 3 **characterised in that** retention of the biological particles (4) containing the analyte or analytes in the filter (6) is essentially dependent on the chemical properties of the particle.

5. The assay of any of claims 1 to 4 **characterised in that** the biological particles (4) containing the analyte or analytes are selected from the group consisting of prokaryotic or eukaryotic cells or spores or components thereof, viruses or viral particles, complexes comprising protein and/or nucleic acid, and any combination thereof.

6. The assay of claim 5 **characterised in that** the biological particles (4) containing the analyte or analytes are selected from the group consisting of bacteria, bacterial cell, plant pollen, mithochondria, chloroplast, cell nuclei, virus, phage, chromosome and ribosome.

7. The assay of any of claims 1 to 6 **characterised in that** the biological particles (4) containing the analyte or analytes are flushed with a liquid or a gas preferably not contained in the original sample 2.

8. An arrangement (12) for preparing a biological sample (2) for quantitative and/or qualitative analysis of the presence of a specific analyte or specific analytes, which analytes, if present, are contained in biological particles (4) of the sample (2), wherein the arrangement (12) comprises
a) a housing (14) for a filter (6);
b) a filter (6) within said housing (14) for retaining the biological particles (4) containing the analyte or analytes, said filter (6) having two sides,
i) a sample inlet side (16) and
ii) a flushing flow inlet side (18); and
c) means for
i) leading (20) the sample (2) through the filter (6) from the sample inlet side (16) to the flushing flow inlet side (18),
ii) leading (22) the flush flow (8) from its inlet side (18) to the sample inlet side (16), and
iii) retrieving (24) for analysis biological particles (4) containing the analyte flushed from the filter (6);
**characterised in that** the arrangement (12) comprises a filter rack (32) that is a multi-way valve, with separate connections for sample inlet (20), sample retrieval (24), flush flow inlet (36) and waste disposal (38), and optionally for wash flow (34), and the filter rack (32) with the filter (6) can be turned in alternative positions so that flow is directed from
d) the sample inlet (20) into the filter (6) from the sample inlet side (16) to the flush flow inlet side (18) and to waste (38) or optionally for use as flush flow,
e) the flush flow inlet (22) into the filter (6) from the flush flow inlet side (18) to the sample inlet side (16) and to sample retrieval (24), or
f) optionally, the flow inlet (30) into the filter (6) from the sample inlet side (16) to the flush flow inlet side (18) and to waste (38) or for recycling.

9. The arrangement (12) according to claim 9 **characterised in that** the arrangement (12) further comprises
a) an additional filter (26) that does not retain the biological particles (4) containing the analyte or analytes but retains particles (10) that might interfere with the analysis of the analyte or analytes, and
b) means for leading (28) the sample (2) through said additional filter (26) prior to leading it through the filter (6) for retaining the biological particles (4) containing the analyte or analytes.

10. The arrangement (12) according to claim 8 or 9 **characterised in that** the arrangement (12) further comprises means for leading (30) a washing liquid or gas through the filter (6) from the sample inlet side (16) to the flushing flow inlet side (18) for washing the retained biological particles (4) containing the analyte or analytes prior to flushing them out of the filter (6).

11. A kit of parts, components and/or reagents for performing the assay according to any of claims 1 to 7, **characterised in that** it comprises the arrangement (12) according to any of claims 8 to 10.

## Patentansprüche

1. Nucleinsäureamplifikationsassay für quantitative und/oder qualitative Analyse auf die Anwesenheit eines bestimmten Analyten oder bestimmten Analyten in einer biologischen Probe, wobei Analyte, falls vorhanden, in biologischen Partikeln (4) der genannten Probe (2) enthalten sind, in welchem Assay die Probe (2) in einer ersten Richtung durch einen Filter (6) gedrückt wird, der die genannten biologischen Partikel (4) zurückhält, **dadurch gekennzeichnet, dass** die genannten biologischen Partikel (4), zurückgehalten im genannten Filter (6), ausgespült werden, durch einen Spülstrom (8), in einer zweiten entgegengesetzten Richtung durch genannten Filter (6) aus dem genannten Filter (6), und genannten Spülstrom (8), welcher die genannten biologischen Partikel (4) beinhaltet, der ausgespült wird, auf den Analyt oder die Analyten analysiert wird, wobei das Analysieren, welches aus Amplifikation und Detektion ohne eine weitere Aufreinigung besteht; und Mittel zur Analyse des Analyten oder der Analyten aus der Gruppe, bestehend aus Polymerasekettenreaktion (PCR), reverse Transkriptasepolymerasekettenreaktion (RT-PCR), Ligasekettenreaktion (LCR), Proximity Ligation Assay, Nucleinsäuresequenz basierte Amplifikation (NASBA), Strangverdrängungsamplifikation (strand displacement amplification, SDA) und einer beliebigen Kombination davon, ausgewählt werden.

2. Assay gemäß Anspruch 1, **dadurch gekennzeichnet, dass** der genannte Assay eine zusätzliche Filtration vor der Filtration, welche die biologischen Partikel (4), welche den Analyten oder die Analyten enthalten, zurückbehält, umfasst, die zusätzliche Filtration die biologischen Partikel (4), welche den Analyten oder die Analyten enthalten, nicht zurückhält, aber Partikel (10) zurückhält, die die Analyse des Analyten oder der Analyten stören könnten.

3. Assay gemäß Anspruch 1 oder 2, **dadurch gekennzeichnet, dass** Zurückhalten der biologischen Partikel (4), welche den Analyten oder die Analyten enthalten, in dem Filter (6), im Wesentlichen größenabhängig ist.

4. Assay gemäß einem der Ansprüche 1 bis 3, **dadurch gekennzeichnet, dass** Zurückhalten der biologischen Partikel (4), welche den Analyten oder die Analyten enthalten, in dem Filter (6), im Wesentlichen abhängig von den chemischen Eigenschaften des Partikels ist.

5. Assay gemäß einem der Ansprüche 1 bis 4, **dadurch gekennzeichnet, dass** die biologischen Partikel (4), welche den Analyten oder die Analyten enthalten, aus der Gruppe, bestehend aus prokaryotischen oder eukaryotischen Zellen oder Sporen oder Komponenten davon, Viren oder viralen Partikeln, Komplexen, welche Protein und/oder Nucleinsäure umfassen, und einer Kombination davon, ausgewählt werden.

6. Assay gemäß Anspruch 5, **dadurch gekennzeichnet, dass** die biologischen Partikel (4), welche den Analyten oder die Analyten enthalten, aus der Gruppe, bestehend aus Bakterien, Bakterienzellen, Pflanzenpollen, Mitochondrien, Chloroplast, Zellkernen, Virus, Phage, Chromosom und Ribosom, ausgewählt werden.

7. Assay gemäß einem der Ansprüche 1 bis 6, **dadurch gekennzeichnet, dass** die biologischen Partikel (4), welche den Analyten oder die Analyten enthalten, mit einer Flüssigkeit oder einem Gas, welche(s) vorzugsweise nicht in der ursprünglichen Probe (2) enthalten ist, ausgespült werden.

8. Anordnung (12) zur Vorbereitung einer biologischen Probe (2) für die quantitative und/oder qualitative Analyse auf die Anwesenheit eines bestimmten Analyten oder bestimmten Analyten, wobei Analyten, falls vorhanden, in biologischen Partikeln (4) der Probe (2) enthalten sind, wobei die Anordnung (12) umfasst
a) ein Gehäuse (14) für einen Filter (6);
b) einen Filter (6) innerhalb genannten Gehäuses (14), zum Zurückhalten der biologischen Partikel (4), welche den Analyten oder die Analyten enthalten, wobei der genannte Filter (6) zwei Seiten hat,
i) eine Probeneinlassseite (16) und
ii) eine Spülstromeinlassseite (18); und
c) Mittel zur
i) Führung (20) der Probe (2) durch den Filter (6) von der Probeneinlassseite (16) zu der Spülstromeinlassseite (18),
ii) Führung (22) des Spülstrom (8) von dessen Einlassseite (18) zu der Probeneinlassseite (16), und
iii) Rückgewinnung (24) für Analyse biologischer Partikel (4), welche den Analyten enthalten, ausgespült aus dem Filter (6);
**dadurch gekennzeichnet, dass** die Anordnung (12) einen Filterhalter (32) umfasst, der ein Mehrwegeventil ist, mit getrennten Verbindungen zum Probeneinlass (20), zur Probenrückgewinnung (24), zum Spülstromeinlass (36) und zur Entsorgung (38), und gegebenenfalls zum Waschstrom (34), und der Filterhalter (32) mit dem Filter (6) in alternative Positionen gedreht sein kann, so dass der Strom geleitet wird aus
d) dem Probeneinlass (20) in den Filter (6) von der Probeneinlassseite (16) zu der Spülstromeinlassseite (18) und zum Abfall (38) oder gegebenenfalls zur Verwendung als Spülstrom,
e) dem Spülstromeinlass (22) in den Filter (6) von der Spülstromeinlassseite (18) zu der Probeneinlassseite (16) und zur Probenrückgewinnung (24), oder
f) gegebenenfalls, dem Stromeinlass (30) in den Filter (6) von der Probeneinlassseite (16) zu der Spülstromeinlassseite (18) und zum Abfall (38) oder zum Recycling.

9. Anordnung (12) gemäß Anspruch 9, **dadurch gekennzeichnet, dass** die Anordnung (12) weiter umfasst
a) einen zusätzlichen Filter (26), der die biologischen Partikel (4), welche den Analyten oder die Analyten enthalten, nicht zurückhält, aber Partikel (10) zurückhält, die die Analyse des Analyten oder der Analyten stören könnten, und
b) Mittel zur Führung (28) der Probe (2) durch den zusätzlichen Filter (26), bevor diese durch den Filter (6) geleitet wird zum Zurückhalten der biologischen Partikel (4), welche den Analyten oder die Analyten enthalten.

10. Anordnung (12) gemäß Anspruch 8 oder 9, **dadurch gekennzeichnet, dass** die Anordnung (12) des Weiteren Mittel zum Leiten (30) einer Waschflüssigkeit oder eines Waschgases durch den Filter (6) von der Probeneinlassseite (16) zu der Spülstromeinlassseite (18) zum Waschen der zurückgehaltenen biologischen Partikel (4), welche den Analyten oder die Analyten enthalten, bevor diese aus dem Filter (6) ausgewaschen werden, umfasst.

11. Kit aus Teilen, Komponenten und/oder Reagenzien zur Durchführung des Assays gemäß einem der Ansprüche 1 bis 7, **dadurch gekennzeichnet, dass** dieses die Anordnung (12) gemäß einem der Ansprüche 8 bis 10 umfasst.

## Revendications

1. Dosage d'amplification d'acide nucléique pour l'analyse quantitative et/ou qualitative de la présence d'un analyte spécifique ou d'analytes spécifiques dans un échantillon biologique, lesquels analytes, s'ils sont présents, sont contenus dans des particules biologiques (4) dudit échantillon (2), dosage dans lequel l'échantillon (2) est forcé à passer dans une première direction à travers un filtre (6) qui retient lesdites particules biologiques (4), **caractérisé en ce que** lesdites particules biologiques (4) retenues sur ledit filtre (6) sont chassées dudit filtre (6) par un courant de chasse (8), dans une deuxième direction opposée à travers ledit filtre (6), et ledit courant de chasse (8) contenant lesdites particules biologiques (4) chassées est analysé pour l'analyte ou les analytes, l'analyse consistant en une amplification et une détection, sans aucune purification supplémentaire; et un moyen pour analyser l'analyte ou les analytes est choisi dans le groupe formé par une amplification en chaîne par polymérase (PCR), une amplification en chaîne par polymérase après transcription inverse (RT-PCR), une réaction en chaîne par ligase (LCR), un dosage de ligature de proximité, une amplification basée sur une séquence d'acide nucléique (NASBA), une amplification par déplacement de brin (SDA), et toute combinaison de ceux-ci.

2. Dosage selon la revendication 1, **caractérisé en ce que** ledit dosage comprend une filtration supplémentaire avant la filtration retenant les particules biologiques (4) contenant l'analyte ou les analytes, laquelle filtration supplémentaire ne retient pas les particules biologiques (4) contenant l'analyte ou les analytes, mais retient des particules (10) qui sont susceptibles de perturber l'analyse de l'analyte ou des analytes.

3. Dosage selon la revendication 1 ou 2, **caractérisé en ce que** la rétention des particules biologiques (4) contenant l'analyte ou les analytes sur le filtre (6) est essentiellement basée sur la taille.

4. Dosage selon l'une quelconque des revendications 1 à 3, **caractérisé en ce que** la rétention des particules biologiques (4) contenant l'analyte ou les analytes sur le filtre (6) est essentiellement basée sur les propriétés chimiques de la particule.

5. Dosage selon l'une quelconque des revendications 1 à 4, **caractérisé en ce que** les particules biologiques (4) contenant l'analyte ou les analytes sont choisies dans le groupe formé par des cellules procaryotes ou eucaryotes ou des spores ou constituants de celles-ci, des virus ou particules virales, des complexes comprenant une protéine et/ou de l'acide nucléique, et toute combinaison de ceux-ci.

6. Dosage selon la revendication 5, **caractérisé en ce que** les particules biologiques (4) contenant l'analyte ou les analytes sont choisies dans le groupe formé par des bactéries, des cellules bactériennes, du pollen de plantes, des mitochondries, des chloroplastes, des noyaux cellulaires, des virus, des phages, des chromosomes et des ribosomes.

7. Dosage selon l'une quelconque des revendications 1 à 6, **caractérisé en ce que** les particules biologiques (4) contenant l'analyte ou les analytes sont chassées avec un liquide ou un gaz de préférence non contenu dans l'échantillon de départ (2).

8. Agencement (12) pour préparer un échantillon biologique (2) pour l'analyse quantitative et/ou qualitative de la présence d'un analyte spécifique ou d'analytes spécifiques, lesquels analytes, s'ils sont présents, sont contenus dans des particules biologiques (4) de l'échantillon (2), dans lequel l'agencement (12) comprend
a) un logement (14) pour un filtre (6) ;
b) un filtre (6) à l'intérieur dudit logement (14) pour retenir les particules biologiques (4) contenant l'analyte ou les analytes, ledit filtre (6) ayant deux côtés,
i) un côté d'entrée d'échantillon (16) et
ii) un côté d'entrée de courant de chasse (18); et
c) un moyen pour
i) diriger (20) l'échantillon (2) à travers le filtre (6) du côté d'entrée d'échantillon (16) au côté d'entrée de courant de chasse (18),
ii) diriger (22) le courant de chasse (8) de son côté d'entrée (18) au côté d'entrée d'échantillon (16), et
iii) collecter (24) pour analyse des particules biologiques (4) contenant l'analyte chassé du filtre (6);
**caractérisé en ce que** l'agencement (12) comprend un support de filtre (32) qui est une vanne multidirectionnelle, avec des raccords séparés pour l'entrée de l'échantillon (20), la collecte de l'échantillon (24), l'entrée du courant de chasse (36) et l'élimination des déchets (38), et éventuellement pour un courant de lavage (34), et le support de filtre (32) muni du filtre (6) peut être tourné dans plusieurs positions différentes de sorte que le courant soit dirigé
d) de l'entrée de l'échantillon (20) dans le filtre (6), du côté d'entrée d'échantillon (16) au côté d'entrée de courant de chasse (18), et vers les déchets (38) ou éventuellement pour être utilisé comme courant de chasse,
e) de l'entrée du courant de chasse (22) dans filtre (6), du côté d'entrée de courant de chasse (18) au côté d'entrée d'échantillon (16), et vers la collecte de l'échantillon (24), ou
f) éventuellement, de l'entrée du courant (30) dans le filtre (6), du côté d'entrée d'échantillon (16) au côté d'entrée de courant de chasse (18), et vers les déchets (38) ou pour être recyclé.

9. Agencement (12) selon la revendication 9, **caractérisé en ce que** l'agencement (12) comprend en outre
a) un filtre supplémentaire (26) qui ne retient pas les particules biologiques (4) contenant l'analyte ou les analytes, mais qui retient des particules (10) qui sont susceptibles de perturber l'analyse de l'analyte ou des analytes, et
b) un moyen pour diriger (28) l'échantillon (2) à travers ledit filtre supplémentaire (26) avant de le diriger à travers le filtre (6) pour retenir les particules biologiques (4) contenant l'analyte ou les analytes.

10. Agencement (12) selon la revendication 8 ou 9, **caractérisé en ce que** l'agencement (12) comprend en outre un moyen pour diriger (30) un gaz ou un liquide de lavage à travers le filtre (6), du côté d'entrée d'échantillon (16) au côté d'entrée de courant de chasse (18), pour laver les particules biologiques (4) retenues contenant l'analyte ou les analytes avant de les chasser du filtre (6).

11. Trousse de pièces, de composants et/ou de réactifs pour réaliser le dosage selon l'une quelconque des revendications 1 à 7, **caractérisée en ce qu'**elle comprend l'agencement (12) selon l'une quelconque des revendications 8 à 10.
